# EUROPÄISCHE PATENTSCHRIFT

(11) **EP 1 305 261 B1**
(45) Veröffentlichungstag und Bekanntmachung des Hinweises auf die Patenterteilung: **01.09.2004**
(21) Anmeldenummer: 01969529.5
(22) Anmeldetag: 26.07.2001
(51) Int. Cl.: C02F 1/24, B03D 1/02

(54) **VERFAHREN ZUR FLOTATIVEN TRENNUNG EINER FLÜSSIGKEIT VON HIERIN SUSPENDIERTEN TEILCHEN**
METHOD FOR FLOATATION SEPARATION OF A LIQUID, FROM PARTICLES SUSPENDED THEREIN
PROCEDE DE SEPARATION PAR FLOTTAISON D'UN LIQUIDE, ET DE PARTICULES EN SUSPENSION

(30) Priorität: 27.07.2000 DE 10037044
(43) Veröffentlichungstag der Anmeldung: 02.05.2003
(73) Patentinhaber: Betz, Michael, 45721 Haltern (DE)
(72) Erfinder: BETZ, Michael, 48249 Dülmen (DE); NOMAYO, Matthias, 48157 Münster (DE)
(74) Vertreter: Nunnenkamp, Jörg, Dr.
(86) Internationale Anmeldenummer: PCT/EP2001/008679
(87) Internationale Veröffentlichungsnummer: WO 2002/010073

(56) Entgegenhaltungen:
- US-A- 4 267 050
- US-A- 4 783 268
- US-A- 4 900 452
- DATABASE WPI Section Ch, Week 199847 Derwent Publications Ltd., London, GB; Class D15, AN 1998-555204 XP002187003 -& RU 2 108 974 C (KSENOFONTOV B S), 20. April 1998 (1998-04-20)
- DATABASE WPI Section Ch, Week 199146 Derwent Publications Ltd., London, GB; Class D15, AN 1991-337648 XP002187004 -& SU 1 613 435 A (GIPRONINEMETALLRUD), 15. Dezember 1990 (1990-12-15)

## Beschreibung

Die Erfindung betrifft ein Verfahren zur flotativen Trennung einer Flüssigkeit, insbesondere Wasser, von hierin suspendierten Teilchen.

Flotationsverfahren werden bekanntermaßen eingesetzt, um in einer Flüssigkeit suspendierte Teilchen von dieser abzutrennen. Zu diesem Zweck geht man im Stand der Technik so vor, dass zumeist feinperlige Luft bzw. ein entsprechendes Flotationsgas durch die Flüssigkeit geleitet wird. Selbstverständlich muss hierbei sichergestellt werden, dass das Flotationsgas mit dem flüssigen Medium bzw. der Flüssigkeit keine Reaktion eingeht.

Ist dies der Fall, so adsorbieren die zumeist aufsteigenden Gasblasen an die zu suspendierenden Partikel, so dass sich insgesamt die Dichte eines solchen Konglomerates aus Partikel und anhaftendem Gasbläschen im Vergleich zu dem Partikel allein verringert. Hierdurch wird der sogenannte Flotationseffekt erreicht, dass heißt, die suspendierten Teilchen können in der Flüssigkeit nach oben steigen und bilden üblicherweise einen oberflächennahen Schaum, welcher problemlos mechanisch abgezogen werden kann.

Die bekannten Verfahren, von denen die Erfindung ausgeht, haben sich grundsätzlich bewährt. Hierzu wird auf die PCT-Anmeldung WO 00/04969 verwiesen.

Ein Verfahren zur flotativen Trennung einer Flüssigkeit von hierin suspendierten Teilchen, bei welchem ein Gemisch aus einem Trägergas bzw. einem Wasserdampfstrom und einem Flotationsgas bzw. Luftstrom hergestellt und in die Flüssigkeit eingeleitet wird, ist ferner durch die US-A-4 783 268 bekannt geworden. An dieser Stelle wird zwar unter anderem eine bestimmte Konzentration der Luft in dem Gemisch angegeben, allerdings wird das Gasgemisch in einer Zuführleitung dem zu reinigenden Flüssigkeitsstrom vor dem Eintritt in einen Flotationsbehälter zugeführt.

Ein ähnliches Verfahren zur flotativen Trennung einer Flüssigkeit innerhalb eines Flotationsreaktors von hierin suspendierten Teilchen ist Gegenstand der US-A-4 900 452. Auch in diesem Fall wird auf ein Gemisch aus Luft und einem Transfergas zurückgegriffen. Allerdings liegt das Transfergas bzw. Trägergas im Vergleich zum Basisgas bzw. Flotationsgas in einer deutlich geringeren Konzentration vor.. Tatsächlich enthält das Gemisch für die Flotation lediglich 10 bis 30 Vol.-% des Trägergases, während demgegenüber das Flotationsgas bei weitem überwiegt und die restlichen 70 bis 90 Vol.-% ausfüllt. Es besteht folglich die Gefahr, dass das Flotationsgas in großen Blasen durch den Flotationsbehälter wandert und folglich die suspendierten Teilchen kaum oder nur mit geringer Effizienz ausgetragen werden.

Schließlich befasst sich auch die US-A-4 267 050 mit einem flotativen Trennverfahren. Einzelheiten der Gemischzusammensetzung und der Zufuhr des Gemisches zum Flotationsbehälter bleiben offen.

Ungeachtet des skizzierten Standes der Technik mit den genannten Unzulänglichkeiten treten in der Praxis bei der Flotation Probleme dann auf, wenn die Flüssigkeit mit den hierin suspendierten Partikeln bestimmte Temperaturen überschreitet. Denn die Flotationseffizienz hängt davon ab, dass Partikelgröße und Gasbläschenvolumen sowie -anzahl aneinander angepasst sind. Mit anderen Worten werden zumeist kleine suspendierte Teilchen dann besonders effektiv aus der zu reinigenden Flüssigkeit ausgetragen, wenn das Flotationsgas besonders feinperlig durch die Flüssigkeit aufsteigt.

Diesem Umstand steht jedoch die Neigung der Gasbläschen entgegen, bei erhöhten Temperaturen größere Blasen infolge Koaleszenz zu bilden. Diese sogenannten Makroblasen erlauben nur noch geringe Wechselwirkungen mit den suspendierten Partikeln im Wasser. Das lässt sich im Wesentlichen auf Ihre verminderte Oberflächenspannung und erhöhte Geschwindigkeit in der Flüssigkeit im Vergleich zu feinperligen Gasbläschen zurückführen.

Jedenfalls wird deutlich, dass die Flotationseffizienz, dass heißt die Anzahl der durch Flotation austragbaren suspendierten Teilchen mit steigender Temperatur der Flüssigkeit sinkt, und zwar zum Teil drastisch. - Hier will die Erfindung insgesamt Abhilfe schaffen.

Der Erfindung liegt das technische Problem zugrunde, ein Verfahren zur flotativen Trennung einer Flüssigkeit von hierin suspendierten Teilchen anzugeben, welches mit im Vergleich zum Stand der Technik vergrößerter Flotationseffizienz bei einfacherem Aufbau arbeitet und insbesondere den beschriebenen Temperatureffekten Rechnung trägt.

Zur Lösung dieses Problems ist Gegenstand der Erfindung ein Verfahren gemäß Anspruch 1.

Die Erfindung geht also von dem grundsätzlichen Gedanken aus, dass feine Gasbläschen auch bei erhöhter Temperatur der zu reinigenden Flüssigkeit vorhanden bleiben und einen sehr guten Flotationseffekt und damit eine unveränderte Flotationseffizienz erzielen, wenn deren Koaleszenz verhindert wird. Das erreicht die Erfindung dadurch, dass die Gasbläschen bei ihrer Entstehung so verdünnt in die Flüssigkeit gelangen, dass die Wahrscheinlichkeit, andere Gasbläschen zu treffen und damit zu koaleszieren, vergleichsweise niedrig ist.

Anders ausgedrückt, löst sich das Trägergas des Gemisches aus Trägergas und Flotationsgas beim Eintritt in die Flüssigkeit hierin mehr oder minder vollständig auf. Folglich verbleibt von dem Gemisch im Wesentlichen nur das eigentliche Flotationsgas, und zwar in der angegebenen Konzentration von einigen ‰ bis zu ca. 10% bezogen auf das Gesamtvolumen des Gemisches. Dementsprechend wird das eigentliche Flotationsgas der Flüssigkeit in äußerst verdünnter Weise und im Übrigen gleichmäßig verteilt zugeführt.

Selbstverständlich muss hierbei sichergestellt werden, dass sich das Trägergas - wie beschrieben - in der Flüssigkeit löst, während das Flotationsgas hierin unter normalen Umständen schwer löslich bis nicht löslich ist. Dabei erreicht die Erfindung den Effekt, dass das verbleibende Flotationsgas durch die starke Verdünnung feine Gasbläschen bildet, die aufsteigen und problemlos in Kontakt mit den suspendierten Partikeln treten können, auch wenn diese nur eine geringe Größe aufweisen.

Das beschriebene Verfahren kann grundsätzlich an ganz unterschiedliche Temperaturen der zu reinigenden Flüssigkeit angepasst werden. Es ist lediglich erforderlich, die Zusammensetzung des Gemisches entsprechend anzupassen. Gleiches gilt natürlich auch mit Blick auf die Konzentration an suspendierten und auszutragenden Teilchen. Je höher diese ist, um so mehr Flotationsgas wird man dem Gemisch zusetzen (müssen).

Dabei haben sich als Trägergas besonders Gasgemische aus Wasserdampf und Kohlendioxid (CO₂), Schwefelwasserstoff (H₂S), Schwefeldioxid (SO₂), Ammoniak (NH₃) und andere, mit der Flüssigkeit reagierende bzw. hierin lösliche Gase als besonders vorteilhaft erwiesen. Diese können zudem die Flüssigkeit in bestimmter und gewünschter Weise beeinflussen.

So löst sich beispielsweise Kohlendioxid in Wasser nicht nur, sondern verändert auch dessen pH-Wert in Richtung sauer. Dadurch daß Wasserdampf Verwendung findet, lässt sich die Temperatur der Flüssigkeit (üblicherweise Wasser) zumeist erhöhen, und zwar um einen gewünschten Betrag. Selbstverständlich kommt es je nach Wasserdampfeintrag auch nicht oder nur unwesentlich zu einem Anstieg der Temperatur. Jedenfalls lassen sich durch den Eintrag des Gemisches bestimmte Parameter der Flüssigkeit wie Temperatur und/oder pH-Wert gezielt beeinflussen.

Bei dem Flotationsgas handelt es sich in der Regel um Luft, Sauerstoff (O₂), Stickstoff (N₂), Argon (Ar) , Wasserstoff (H₂) oder vergleichbare inerte Gase oder Gasgemische. Für diese muss sichergestellt werden, dass sie sich nicht oder nur unwesentlich in der Flüssigkeit lösen und im Übrigen mit den suspendierten Teilchen keine Reaktion eingehen.

Immer wird auf verblüffend einfache Art und Weise erreicht, dass selbst bei erhöhten Temperaturen einer Flüssigkeit die hierin suspendierten Teilchen einwandfrei ausgetragen werden können. Hierfür sorgt das eingesetzte (Gas-)Gemisch aus Trägergas und Flotationsgas. Infolge des sich in der Flüssigkeit lösenden Trägergases wird darüber hinaus die Möglichkeit eröffnet, die Flüssigkeit in bestimmten und gewünschten Richtungen (pH-Wert, Temperatur, Löslichkeit, chemische Beschaffenheit der suspendierten Teilchen bzw. der Flüssigkeit usw.) zu beeinflussen. So kann beispielsweise auf Metalle durch die Bildung von Sulfiden direkter Einfluss genommen werden. Hierin sind insgesamt die wesentlichen Vorteile der Erfindung zu sehen.

### Ausführungsbeispiel 1:

Die Herstellung des Gasgemisches aus dem Trägergas und dem Flotationsgas wird im Rahmen eines üblichen und gebräuchlichen Gasmischvorganges Vorgenommen. Das Gasgemisch wird anschließend mit Hilfe einer Turbine oder über Düsen in einen Flotationsbehälter, gegebenenfalls unter Verwirbelung, eingebracht. Im Rahmen des Ausführungsbeispiels dient hierzu eine im Bodenbereich des zugehörigen Behälters angebrachte Sintermetallplatte, die mit feinen Bohrungen an ihrer Obenseite ausgerüstet ist. Aus diesen Bohrungen tritt das erfindungsgemäße Gemisch gleichförmig in die Flüssigkeit aus.

Bei dem Trägergas handelt es sich um Wasserdampf, welches mit der eingefüllten Flüssigkeit, größtenteils Wasser mit hierin gelösten Proteinen, unter Wärmeübertragung reagiert. Nach Auflösung der zugehörigen Dampfbläschen verbleibt das Flotationsgas - vorliegend Luft - in Form feinster Bläschen im Wasser und steigt hierin auf. Durch die Einstellung einer Konzentration von ca. 5 % Luft in 95 % Wasserdampf wird gewährleistet, dass die nach Auflösung des Wasserdampfes in der Flüssigkeit verbleibenden Luftbläschen ausreichende Zeit klein genug bleiben, um für eine effektive Flotation der suspendierten Partikel zu sorgen.

Bei den in der Flüssigkeit, zum Beispiel See- oder Meerwasser, gelösten Proteinen handelt es sich um solche aus Fischblut, die bei der Verarbeitung von Fisch zu Fischmehl anfallen. Diese Proteine lassen sich thermisch koagulieren. Die hierfür erforderliche Temperatur liegt bei ca. 70°C. Da die koagulierten Proteine in etwa die gleiche Dichte wie das umgebende (See- oder Meer-)Wasser aufweisen, ist eine direkte Flotation bei dieser Temperatur nicht möglich.

Um die Flüssigkeit auf die vorgenannte Temperatur zu bringen, wird zuvor Wasserdampf zugegeben, welcher wie das nachfolgend eingebrachte Gemisch die angegebene Sinterplatte in Bodennähe des Flotationsbehälters verlässt. Zu diesem Zweck findet sich am Boden des Behälters bzw. Beckens eine Dampfdruckkammer, welche auf der zum Becken liegenden Seite mit der angegebenen Sintermetallplatte verschlossen ist. Neben den angesprochenen Proteinen bzw. dem frischen Fischblut finden sich weitere Substanzen in der Flüssigkeit, vorliegend Meerwasser, und zwar Öle sowie andere organische Substanzen (z.B. Fischpumpwasser aus der Fischmehlproduktion).

Über die Dampfdruckkammer und durch die Sinterplatte wird der Dampf zur Erwärmung der Flüssigkeit und anschließend das erfindungsgemäße Gemisch in das Becken bzw. den Behälter eingeleitet. Selbstverständlich kann es je nach Temperatur der Flüssigkeit auch ausreichen, von vornherein mit dem Dampf-/Luftgemisch zu arbeiten, ohne dass ein zusätzlicher Erwärmungsschritt vorgeschaltet werden muss.

So oder so verteilt sich bei Eintritt des Gemisches aus dem Dampf und der Luft der Dampf im Becken und im Wasser und gibt seine Wärmeenergie ab. Hierbei kondensiert er. Ab einer bestimmten Mindesttemperatur in der Flüssigkeit denaturieren die Eiweiße aus dem Fischblut und koagulieren (vorliegend ca. 70°C).

Da sich die im Dampf gelöste Luft nicht im heißen Wasser lösen kann, steigt sie als Bläschen auf. Gleichzeitig tritt die Luft in Wechselwirkung mit den Partikeln und vermindert durch ihre Anlagerung an diesen Partikel die Dichte der hieraus gebildeten Konglomerate. Anschließend treiben die Partikel auf und bilden an der Wasseroberfläche einen Schaum. Dieser lässt sich durch bekannte mechanische Abschöpfeinrichtungen entfernen. Dabei hängt die Konsistenz des gebildeten Schaumes von der Menge der Luft im Gemisch ab.

### Ausführungsbeispiel 2:

Unabhängig davon lässt sich in vergleichbarer Weise heißes Wasser, z. B. Brüdenkondensat, durch Flotation reinigen. Derartige Flüssigkeiten bzw. Brüdenkondensate resultieren zumeist aus der Fischmehlerzeugung und enthalten durch Verschleppung häufig noch Fette und andere gelöste Partikel, die sich erst nach Abkühlen aus dem Wasser absondern. Eine Flotation unter üblichen Bedingungen ist nicht möglich bzw. lässt sich nicht effektiv und kostengünstig durchführen.

Zu diesem Zweck schlägt die Erfindung vor, das frische, heiße Brüdenkondensat durch eine rechteckige (oder anders geformte) Flotationszelle zu leiten, wobei frisches Wasser an einer Seite oberflächennah bzw. an der Oberfläche eintritt und von der gegenüberliegenden Seite bodennah aus dem Becken abgezogen wird. Dabei können je nach Größe des Beckens Umlenkungen bzw. Barrieren vorgesehen werden.

Mit Hilfe der bereits beschriebenen Vorrichtung (Dampfdruckkammer mit Sinterplatte sowie vorgeschalteter Gasmischung) wird nun Dampf in das heiße Wasser bzw. Brüdenkondensat geleitet. Zu diesem Zweck kann die betreffende Vorrichtung einen Sintermetallfinger aufweisen, welcher mit einer Dampfleitung verbunden ist. Alternativ hierzu lässt sich auch auf die bereits beschriebene Druckkammer zurückgreifen, welche auf der dem Wasser zugewandten Seite mit der Sintermetallplatte inklusive Bohrungen verschlossen wird. Diese Druckkammer wird mit der Dampfzuleitung verbunden und weist einen Kondensatablauf auf.

Im Rahmen einer Leitungsverzweigung kann dem Dampf vor Eintritt in die Druckkammer bzw. Sintermetallkammer Luft und/oder ein inertes Gas in geringen Mengen zudosiert werden, wie dies der Patentanspruch 1 fordert. Das inerte Gas entstammt einer Gasdruckflasche, welche die zugeführte Gasmenge über ein Druckventil regelt.

Im Rahmen des zweiten Beispieles wird die Temperatur der heißen Brüdenkondensate bzw. der Flüssigkeit nur unwesentlich durch den eingesetzten Dampf erhöht, da nur so viel Wasserdampf verwendet wird, wie zur Lösung der Luft im Wasser erforderlich ist. Ohnehin spielt die Ausgangstemperatur des Brüdenkondensates keine Rolle.

In Abhängigkeit von der Konzentration an suspendierten und flotierbaren Teilchen bzw. Substanzen im Brüdenkondensat bildet sich ein Schaum auf der Flüssigkeitsoberfläche, welcher mechanisch abgeräumt werden kann. In der Flüssigkeit finden sich anschließend keine flotierbaren Bestandteile mehr.

## Patentansprüche

1. Verfahren zur flotativen Trennung einer Flüssigkeit, insbesondere See- oder Meerwasser, von hierin suspendierten Proteinen in einem Flotationsbehälter, wonach
- ein Gemisch aus im Wesentlichen Wasserdampf als Trägergas und einem Flotationsgas unter Berücksichtigung einer Konzentration des Flotationsgases von einigen % bis zu ca. 10% im Gemisch hergestellt und in die Flüssigkeit eingeleitet wird, wobei
- sich das Trägergas größtenteils in der Flüssigkeit auflöst, und wobei
- die Temperatur der Flüssigkeit je nach Wasserdampfeintrag um einen gewünschten Betrag steigt, sodass die hierin befindlichen suspendierten Proteine thermisch koagulieren, und wonach
- das verbleibende, bläschenbildende Flotationsgas in Kontakt mit den suspendierten bzw. koagulierten Teilchen tritt und diese unter Schaumbildung an die Oberfläche der Flüssigkeit trägt.

2. Verfahren nach Anspruch 1, **dadurch gekennzeichnet, dass** die Flüssigkeit mit Hilfe des Gemisches aus Trägergas und Flotationsgas hinsichtlich ihres PH-Wertes und/ oder ihrer Löslichkeit, chemischen Beschaffenheit der suspendierten Teilchen bzw. der Flüssigkeit usw. beeinflusst wird.

3. Verfahren nach Anspruch 1 oder 2, **dadurch gekennzeichnet, dass** das Gemisch durch eine bodennahe Sinterplatte mit feinen Bohrungen in den Flotationsbehälter eintritt, wobei die Sinterplatte eine Dampfdruckkammer am Boden des Flotationsbehälters auf der zum Behälter liegenden Seite verschließt.

4. Verfahren nach einem der Ansprüche 1 bis 3, **dadurch gekennzeichnet, dass** als Trägergas Gasgemische aus Wasserdampf und Kohlendioxid, Schwefelwasserstoff, Schwefeldioxid, Ammoniak oder dergleichen in der Flüssigkeit lösbare Gase eingesetzt werden.

5. Verfahren nach einem der Ansprüche 1 bis 4, **dadurch gekennzeichnet, dass** als Flotationsgas Luft, Sauerstoff, Stickstoff, Argon, Wasserstoff oder ein vergleichbares inertes Gas oder Gasgemisch Verwendung findet.

6. Verfahren nach einem der Ansprüche 1 bis 5, **dadurch gekennzeichnet, dass** über die Dampfdruckkammer und durch die Sinterplatte oder einen Sintermetallfinger zunächst lediglich Wasserdampf zur Erwärmung der Flüssigkeit und anschließend das Gemisch aus dem Trägergas und dem Flotationsgas in die Flüssigkeit eingeleitet wird.

7. Verfahren nach einem der Ansprüche 1 bis 6, **dadurch gekennzeichnet, dass** die Druckkammer eine angeschlossene Dampfzuleitung und einen Kondensatablauf aufweist.

## Claims

1. A method for flotational separation of a liquid, particularly lake- or seawater, from proteins suspended therein in a buoyant container, according to which
- a mixture consisting essentially of water vapour as the carrier gas and a flotation gas, providing for a concentration of the flotation gas from a few ‰ to approx. 10 % in the mixture, is prepared and fed into the liquid, wherein
- the carrier gas is largely dissolved in the liquid and wherein
- the temperature of the liquid rises by the desired amount depending on the quantity of water vapour introduced, so that the proteins suspended therein coagulate under the influence of heat, and after which
- the remaining flotation gas, forming bubbles, comes into contact with the suspended and/or coagulated particles and carries them to the surface of the liquid, forming a foam.

2. The method according to claim 1, **characterised in that** the liquid is influenced with regard to its pH value and/or its solubility, chemical composition of the suspended particles and/or the liquid etc. by the agency of the mixture of carrier gas and flotation gas.

3. The method according to claim 1 or 2, **characterised in that** the mixture is introduced into the buoyant container through a sintering plate near the base thereof that is furnished with small holes, the sintering plate closing off a steam pressure chamber in the base of the buoyant container on the side closest to the container.

4. The method according to any of claims 1 to 3, **characterised in that** gas mixtures of water vapour and carbon dioxide, hydrogen sulphide, sulphur dioxide, ammonia or similar gases that are soluble in the liquid are used as the carrier gas.

5. The method according to any of claims 1 to 4, **characterised in that** air, oxygen, nitrogen, argon, hydrogen or a comparable inert gas or gas mixture is used as the flotation gas.

6. The method according to any of claims 1 to 5, **characterised in that** initially only water vapour is passed into the steam pressure chamber and through the sintering plate or a sintering rod in order to heat the liquid, and the mixture of the carrier gas and the flotation gas is introduced into the liquid afterwards.

7. The method according to any of claims 1 to 6, **characterised in that** the pressure chamber has a connected steam feeder line and a condensate drain.

## Revendications

1. Procédé de séparation par flottation d'un liquide, en particulier d'eau de mer, des protéines suspendues dans celui-ci dans un récipient de flottation, selon lequel
- un mélange de vapeur d'eau pour l'essentiel en tant que gaz porteur et d'un gaz de flottation est préparé en tenant compte d'une concentration du gaz de flottation de quelques pour-cent à environ 10 % dans le mélange et est introduit dans le liquide,
- le gaz porteur se dissolvant pour la majeure partie dans le liquide, et
- la température du liquide augmentant en fonction de la charge en vapeur d'eau d'une valeur souhaitée de sorte que les protéines suspendues se trouvant dans celui-ci coagulent thermiquement, et selon lequel
- le gaz de flottation restant, formant des bulles entre en contact avec les particules en suspension ou coagulées et transporte celles-ci en formant de la mousse à la surface du liquide.

2. Procédé selon la revendication 1, **caractérisé en ce que** le liquide est influencé à l'aide du mélange de gaz porteur et de gaz de flottation en ce qui concerne son pH et/ou sa solubilité, les propriétés chimiques des particules en suspension ou du liquide etc.

3. Procédé selon la revendication 1 ou 2, **caractérisé en ce que** le mélange pénètre par une plaque de frittage proche du fond pourvue d'alésages fins dans le récipient de flottation, la plaque de frittage obturant une chambre de pression de la vapeur au niveau du fond du récipient de flottation sur le côté situé vers le récipient.

4. Procédé selon l'une quelconque des revendications 1 à 3, **caractérisé en ce que** des mélanges de gaz composés de vapeur d'eau et de dioxyde de carbone, d'acide sulfurique, de dioxyde de soufre, d'ammoniac ou de gaz similaires solubles dans le liquide sont utilisés en tant que gaz porteurs.

5. Procédé selon l'une quelconque des revendications 1 à 4, **caractérisé en ce que** de l'air, de l'oxygène, de l'azote, de l'argon, de l'hydrogène ou un gaz inerte comparable ou un mélange de gaz est utilisé en tant que gaz de flottation.

6. Procédé selon l'une quelconque des revendications 1 à 5, **caractérisé en ce que** d'abord de la vapeur d'eau uniquement est introduite pour le réchauffage du liquide et ensuite le mélange du gaz porteur et du gaz de flottation est introduit dans le liquide par l'intermédiaire de la chambre de pression de la vapeur et par la plaque de frittage ou d'un doigt métallique de frittage.

7. Procédé selon l'une quelconque des revendications 1 à 6, **caractérisé en ce que** la chambre de pression présente une conduite d'amenée de vapeur et une évacuation de condensat.
